# FASCICULE DE BREVET EUROPEEN

(11) **EP 0 569 475 B1**
(45) Date de publication et mention de la délivrance du brevet: **07.12.1994**
(21) Numéro de dépôt: 92904650.6
(22) Date de dépôt: 24.01.1992
(51) Int. Cl.: A23C 9/144, A23J 1/20

(54) **PROCEDE DE SEPARATION DU PHOSPHOCASEINATE DE CALCIUM ET DU LACTOSERUM D'UN LAIT ECREME ET PLUS GENERALEMENT D'UN COMPOSE PROTEIQUE D'UN LIQUIDE BIOLOGIQUE**
VERFAHREN ZUR SEPARIERUNG VON CALCIUMPHOSPHOCASEINAT UND LAKTOSE AUS MAGERMILCH UND MEHR IM ALLGEMEINEN EINER PROTEINSUBSTANZ AUS EINER BIOLOGISCHEN FLÜSSIGKEIT
METHOD FOR SEPARATING A PROTEIN COMPOUND FROM A BIOLOGICAL LIQUID, PARTICULARLY CALCIUM PHOSPHOCASEINATE AND LACTOSERUM FROM SKIMMED MILK

(30) Priorité: 29.01.1991 FR 9100996
(43) Date de publication de la demande: 18.11.1993
(73) Titulaire: SOCIETE VIDAUBANAISE D'INGENIERIE, F-83550 Vidauban (FR)
(72) Inventeur: NOEL, Roland, F-83550 Vidauban (FR)
(74) Mandataire: Robert, Jean-Pierre
(86) Numéro de dépôt international: FR9200064
(87) Numéro de publication internationale: WO9212642

(56) Documents cités:
- CH-A- 470 141
- FR-A- 2 418 627
- GB-A- 2 100 289
- US-A- 4 713 254

## Description

La séparation de la caséine et du lactosérum d'un lait écrémé peut être réalisée de plusieurs manières connues. Elle constitue l'opération principale à partir de laquelle il est possible d'extraire les divers constituants du lait pour les valoriser de manière séparée.

La caséine trouve une application principale dans l'industrie alimentaire. Le lactosérum, dont le constituant principal est le lactose, trouve des débouchés dans l'industrie alimentaire et dans l'industrie pharmaceutique et parapharmaceutique.

On rappellera qu'il existe plusieurs manières de procéder à cette séparation caséine lactosérum (ou petit-lait):
- la voie acide consistant à incorporer dans le lait un acide pour atteindre le point isoélectrique auquel la caséine flocule et peut être séparée.
- la voie fermentaire qui provoque la formation d'acide lactique permettant d'atteindre le point isoélectrique;
- la voie enzymatique permettant d'obtenir la caséineprésure qui est une caséine insoluble.

Ces procédés industriels ont pour principal inconvénient d'altérer dès l'origine les deux sous-produits du lait ainsi traités, d'en compliquer les opérations ultérieures de traitement, et finalement d'obérer la qualité des produits obtenus et leur valeur marchande. Cette altération porte, pour la caséine, essentiellement sur les protéines dont la structure est profondement modifiée. En effet, en particulier le phosphocaséinate de calcium présent à l'état naturel a été très largement altéré. Pour ce qui concerne le petit-lait, l'altération provient soit de l'addition de sels minéraux qu'il est ensuite coûteux d'extraire, soit de la présence d'acide lactique qui a consommé la plus grande partie du lactose, soit enfin de l'altération des protéines sériques qui est un autre constituant valorisable du lactosérum.

S'ajoute à ces défauts fondamentaux quant à la nature des constituants, la difficulté provenant du fait que la caséine obtenue est insoluble ce qui complique les moyens de sa manutention le long de sa chaîne de traitement. On apporte une solution à ce problème en la transformant en caséinate (addition d'alcali ou d'une base et chauffage) mais ceci au détriment de toutes les qualités organoleptiques qu'elle avait conservées.

Pour tenter de pallier ces inconvénients il a été proposé de procéder à l'acidification du lait par électrodialyse. Cette opération est délicate à conduire du fait du changement de consistance de la caséine au passage du point isoélectrique et du colmatage des membranes d'électrodialyse pouvant en résulter.

Néanmoins, pour bénéficier des avantages de l'électrodialyse résultant essentiellement dans le traitement du lait sans addition de corps étrangers qui sont des facteurs dégradants, des expériences ont été menées pour étudier le comportement du lait à la sortie de l'électrodialyseur en fonction du degré d'acidité atteint, sans pour autant atteindre le point isoélectrique.

C'est ainsi qu'il a été découvert que dans le lait sortant d'un électrodialyseur à pH 5 la caséine se trouve sous forme labile c'est-à-dire dans un état instable entre solubilité et insolubilité, sans altération fondamentale de sa structure.

L'invention a consisté à exploiter le résultat de ces expériences dans un procédé de traitement du lait en vue de la séparation de ses constituants.

A cet effet elle a donc pour objet un procédé de traitement du lait écrémé pour en isoler chacun de ses constituants selon lequel on soumet le lait à une acidification par électrodialyse dans un électrodialyseur à trois compartiments jusqu'à atteindre un pH égal à 5 c'est-à-dire une valeur légèrement supérieure à celle du point isoélectrique, puis on procède à une séparation au moins partielle du phosphocaséinate de calcium et du lactosérum par centrifugation du produit acide issu de l'électrodialyseur. Il sera, dans la suite du texte, mentionné l'un pour l'autre phosphocaséinate de calcium et caséine pour des raisons de simplicité. Il est cependant à noter que la "caséine" selon l'invention reste au long de son traitement un phosphocaséinate de calcium.

Le produit issu de l'électrodialyseur est différent du lait qui y pénêtre par le fait que le phosphocaséinate de calcium est placé dans un état physico-chimique instable entre solubilité et insolubilité, un début de précipitation réversible étant opéré qui permet de différencier la fraction phosphocaséinate de calcium du lactosérum du point de vue d'un traitement par centrifugation, rendant ce traitement possible de manière économique. On sait qu'il est possible, au moins au niveau du laboratoire, de séparer la caséine du petit-lait sans préparation préalable par une centrifugation extrêmement poussée (de l'ordre de 100 000 g). Cette technique n'est pas exploitable industriellement étant donné le coût du matériel à mettre en oeuvre et la difficulté technique de l'exploitation.

En traitant par centrifugation le lait à pH5 environ, la modification intervenue sur le phosphocaséinate de calcium a très nettement différencié les deux composants et on parvient à une séparation par centrifugation entre 5 et 10 000 g, ce qui est permis par des équipements industriels sinon standard, du moins réalisables et exploitables économiquement.

Le phosphocaséinate de calcium instable ou labile ainsi obtenu présente en outre le grand avantage d'être soluble sans qu'il soit nécessaire d'abaisser son pH sous le point isoélectrique. Son traitement ultérieur en est grandement simplifié car cette solubilité fait disparaître tous les problèmes de colmatage et de stagnation qu'il fallait auparavant combattre par des moyens techniques de remuage et des nettoyages fréquents. Avec une circulation fluide disparaissent également les pollutions microbiologiques dues à la stagnation.

Bien entendu, dans un premier étage de séparation, le taux de concentration du phosphocaséinate de calcium dépend de facteurs physiques et économiques si bien que l'on obtient d'une part une caséine concentrée débarassée d'une fraction importante de lactosérum et d'autre part un lactosérum comportant encore quelques fractions de caséine (de l'ordre de quelques pour cents).

Pour parfaire la purification de la caséine, le procédé selon l'invention comporte une seconde phase de concentration, avec une dilution préalable, par centrifugation.

La préparation de la caséine issue du premier séparateur comporte donc une dilution avec de l'eau déminéralisée et une régulation du pH pour le maintenir à une valeur égale à 5. La dilution a pour effet d'augmenter le pH en diminuant la concentration des ions hydrogènes et donc à faire perdre à la caséine son caractère labile. En outre, on a constaté que même en l'absence de dilution, la caséine issue du premier séparateur se transforme d'elle-même avec pour conséquence une tendance à élever son pH.

La régulation du pH consiste donc à réaliser un apport de protons dans la caséine soit par le biais d'une acidification de l'eau de dilution, soit de manière préférée par une dissolution de dioxyde de carbone dans la caséine diluée qui produit de l'acide carbonique.

A la sortie du second séparateur centrifuge, on recueille d'une part une caséine concentrée et purifiée à pH5 soluble et d'autre part un lactosérum dilué également à pH5.

Pour ce qui concerne le lactosérum recueilli à la sortie de l'un ou des deux étages de séparation, il convient d'en extraire la faible proportion de caséine qu'il contient encore.

L'invention propose pour cette voie, de traiter ce composant qui est à pH5 par addition d'un milieu acide, à pH inférieur, et de préférence du lactosérum à pH 2 de manière à placer le composant au point isoélectrique conduisant à la précipitation de la caséine qu'il contient.

La caséine ainsi extraite du lactosérum, à pH 4,6 peut ou non être recyclée dans la voie caséine avant ou après les séparateurs.

On dispose ainsi de deux constituants en phase liquide ne comportant que quelques traces de l'autre constituant. Chacun de ces constituants peut alors subir un cycle de traitement qui lui est propre selon la qualité du produit final que l'on désire obtenir. C'est ainsi que, pour la caséine sortant du second séparateur, plusieurs voies de parachèvement sont possibles.

L'une d'entre elles consiste à abaisser le pH (de 5 à 4,6) de cette caséine pour atteindre le point isoélectrique. On obtient alors une caséine insoluble, après concentration et séchage, qui contrairement aux caséines insolubles traditionnelles n'a subi ni ajout de produit exogène ni traitement thermique.

L'acidification de la caséine peut, dans une autre voie, s'opérer par le moyen de membranes d'électrodialyse (électrodialyseur cationique trois compartiments) ce qui permet d'obtenir, après concentration, une caséine acide (pH 2,8 à 4,4) ayant conservé toutes ses propriétés organoleptiques et comme, dans le cas précédent, n'ayant pas subi de dégradation.

On peut également après finition conditionner la caséine directement à la sortie du second séparateur et la proposer au marché sous forme de lait délactosé ou produit diététique de pédiatrie ou de gériatrie tel quel, concentré ou en poudre.

Le phosphocaséinate de calcium peut, par une autre voie, subir des opérations d'ultrafiltration et diafiltration pour éliminer les dernières traces de lactose. La caséine qui en résulte est ensuite concentrée au moyen d'un concentrateur centrifuge sous vide et à couche mince. Cette phase permet d'opérer cette concentration à basse température (entre 30 et 40°C) pour protéger au maximum les propriétés des protéines.

Un séchage final permet d'obtenir une caséine native purifiée utilisable en standardisation fromagère, ou comme ingrédient dans la fabrication des yaourts, des crèmes glacées ou des chocolats.

On notera enfin un dernier parachèvement possible de la caséine recueillie du second séparateur. Il consiste après ultra et diafiltration à additionner ce produit de sels (chlorures ou carbonates) de Potassium, Sodium, Calcium et à conduire l'ensemble dans un électrodialyseur anionique trois compartiments permettant de produire des caséinates de calcium sodium ou potassium solubles, à pH de 4,8 à 7 qui, après concentration et ultrafiltration, trouvent de nombreuses applications comme produits gélifiants substituts des alginates par exemple. Contrairement à ceux produits par addition d'une base ou d'alcali suivie d'un traitement thermique conformément aux techniques actuelles, ces caséinates ont conservé toutes les propriétés organoleptiques du phosphocaséinate de calcium "natif".

De même, à la sortie du second séparateur, ou plus exactement à la sortie du clarificateur, le lactosérum peut suivre plusieurs voies de parachèvement.

L'une d'elles conduit à un lactosérum hautement déminéralisé. Elle comporte pour ce faire, à la sortie du clarificateur une opération de décationisation au moyen d'une résine cationique d'acide fort. Cette étape est suivie d'une concentration avec, avant ou après, une étape de traitement thermique pour stabiliser la structure microbiologique du lactosérum. Ainsi, le lactosérum est-il à la sortie du concentrateur à un pH de l'ordre de 1,2 pour être introduit comme élément acide dans l'électrodialyseur trois compartiments d'acification du lait, où il subit une désacidification et une désanionisation. La déminéralisation du lactosérum est enfin parachevée dans un électrodialyseur deux compartiments. Pour obtenir une déminéralisation poussée au niveau de cet électrodialyseur deux compartiments, on procède à une circulation en boucle du lactosérum avec une légère adjonction de base qui augmente la quantité de charges dans le lactosérum, et par là l'efficacité de l'électrodialyseur. Il est possible, grâce à cet artifice d'obtenir un taux de déminéralisation supérieur à 96 % qui n'est pas atteint par les procédés connus.

Le procédé selon l'invention, offre également une voie de traitement du lactosérum pour obtenir du lactose de qualité pharmaceutique en première cristallisation après en avoir extrait les protéines sériques à haute pureté microbiologique. Cette voie comporte, après le traitement thermique du lactosérum à pH 2 ou 1,2 (c'est-à-dire avant ou après concentration) une unité d'ultrafiltration qui permet de séparer les protéines sériques. Le perméat lactosé subit ensuite la même déminéralisation que celle du lactosérum, comme agent acide dans l'électrodialyseur trois compartiments pour être ensuite circulé en boucle avec adjonction de base sur l'électrodialyseur deux compartiments. Enfin, avant cristallisation, ce perméat lactosé, désacidifié et déminéralisé est passé sur une résine échangeuse d'ions anionique permettant une décoloration par retenue de la riboflavine.

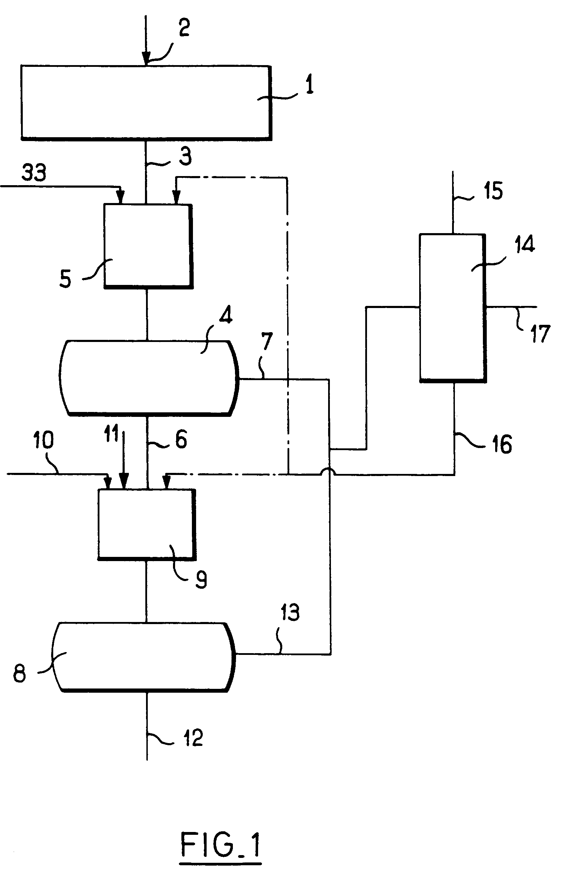

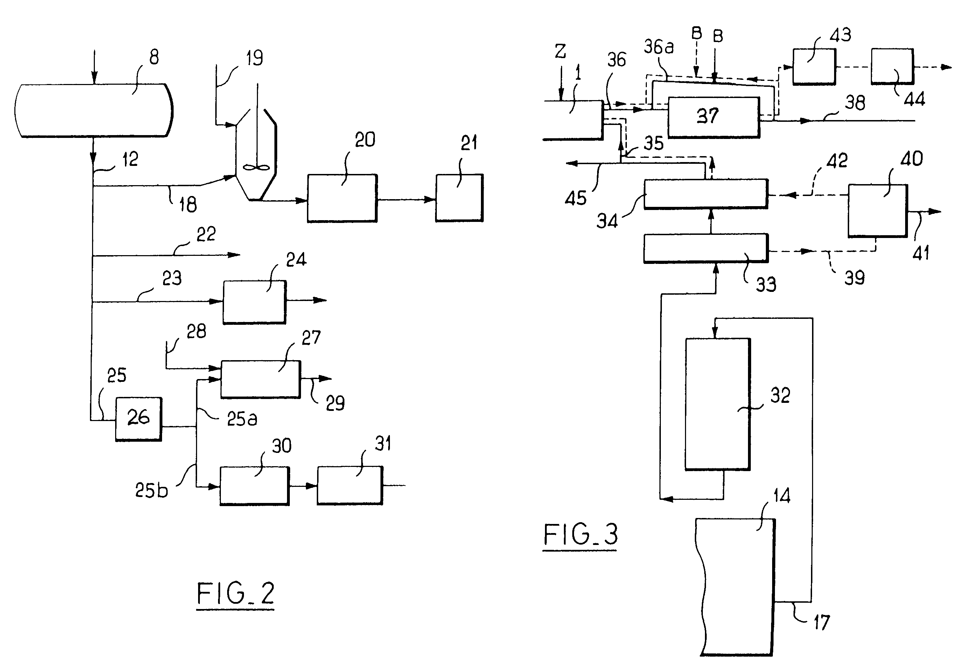

D'autres caractéristiques et avantages de l'invention ressortiront de la description donnée ci-après à titre d'exemple et en référence aux dessins annexés qui comportent:
- en figure 1 un schéma synoptique d'une installation pour réaliser les premières phases du procédé selon l'invention;
- en figure 2, un schéma synoptique de la voie caséine-caséinates après séparation;
- en figure 3, un schéma synoptique de la voie lactosérum-lactose après séparation.

A la figure 1, on a représenté un électrodialyseur 1 à trois compartiments, connu en lui-même, dans les cellules duquel on admet en 2 le lait à traiter. Ce lait sera de préférence de bonne qualité. Il sera maintenu à 4°C et présentera une concentration d'acide lactique inférieur ou égal à 14° Dornic.

La sortie 3 de cet électrodialyseur est reliée à un premier séparateur centrifuge 4 directement ou par l'intermédiaire d'un réservoir tampon 5 d'homogénéisation et de régulation du pH. Le premier séparateur 4 possède une sortie 6 de la phase caséine et une sortie 7 de la phase lactosérum. La phase caséine est introduite dans un second séparateur centrifuge 8 par l'intermédiaire d'un réservoir 9 d'homogénéisation, de dilution et de régulation du pH, auquel aboutissent une amenée 10 d'eau déminéralisée dont l'acidité est fonction du besoin de la régulation pour combattre l'augmentation de pH due à la dilution et à la tendance propre de la caséine de neutraliser progressivement le milieu acide dans lequel elle se trouve.

L'acidification nécessaire à la régulation peut être avantageusement obtenue par dissolution de dioxyde de carbone dans l'eau déminéralisée (dont l'amenée dans le circuit est représentée en 11) qui produit de l'acide carbonique, ou dans la caséine elle-même.

Le séparateur 8 permet d'obtenir en sortie 12 une caséine débarrassée du lactosérum à pH aux alentours de 5 et à l'état soluble et, en sortie 13, un lactosérum dilué.

Le lactosérum recueilli en 7 est mélangé avec celui dilué recueilli en 13 pour être conduit à un séparateur (clarificateur) 14 où on procède à la précipitation du reliquat de caséine qu'il contient par acidification jusqu'à atteindre le point de rupture isoélectrique de la caséine (pH égal à 4,6). L'agent acidifiant parvient à ce clarificateur par l'entrée 15. Il sera avantageusement constitué par un lactosérum acide (pH égal à 2) provenant de l'installation elle-même comme on le verra en regard de la figure 3.

La sortie 16 du clarificateur permet de recueillir la caséine à pH 4,6 soit pour la traiter soit pour la recycler en tête de l'un ou l'autre des séparateurs (par exemple dans les réservoirs d'homogénéisation 5 ou 9). En sortie 17 du clarificateur, on recueille un sérum propre débarrassé de toute caséine.

La figure 2 représente schématiquement les voies "caséine" à la sortie 12 du séparateur centrifuge 8. La voie 18 est destinée à la production de caséine insoluble qui n'a pas été additionnée de produits exogènes et qui n'a subi aucun traitement thermique. Cette caséine est acidifiée en 19 par apport d'un agent acidifiant, par exemple une caséine acide soluble à pH 2,8, jusqu'au point isoélectrique. Recueillie sous forme de précipité insoluble, elle subit ensuite un traitement classique de concentration 20 et de séchage 21 pour être ensuite conditionnée en poudre.

La voie 22 est celle permettant de conditionner tel quel le phosphocaséinate de calcium (ou sous forme concentrée ou sous forme de poudre) pouvant être commercialisé comme lait diététique délactosé, éventuellement aromatisé.

La voie 23 conduit le phosphocaséinate de calcium à pH 5 en direction d'un électrodialyseur cationique trois compartiments 24 qui permet d'obtenir une caséine native à pH compris entre 2,8 et 4,4. La voie 25 comporte une unité 26 d'ultrafiltration et de diafiltration, et en aval de cette unité se divise en une voie 25a et une voie 25b.

La voie 25a comporte un électrodialyseur anionique 27 à trois compartiments dans lequel entre le phosphocaséinate de calcium, additionné en 28 de sels (chlorures ou carbonates) de potassium, sodium, calcium... A la sortie 29, on recueille des caséinates de haute qualité présentant toutes les propriétés organoleptiques de la caséine y entrant.

La voie 25b conduit le concentrat issu de l'unité 26 dans un concentrateur 30 centrifuge fonctionnant à basse température, sous vide et en couches minces pour respecter les propriétés des protéines du phosphocaséinate de calcium. Le produit obtenu, séché en 31, constitue une caséine de haute qualité comportant la plupart des propriétés initiales d'où sa qualification de "native".

La figure 3 représente schématiquement les voies de parachèvement du lactosérum et de ses constituants.

On procède d'abord à une décationisation de cette phase par passage sur des résines échangeuses d'ions cationiques 32. A la sortie de ces résines, le lactosérum est acidifié (pH de l'ordre de 2). Il subit, dans une unité appropriée 33 un traitement thermique dans le but d'une stabilisation microbiologique. Après une étape de concentration 34, le lactosérum acide (pH aux environs de 1,2) est introduit en 35 dans l'électrodialyseur 1 comme agent acide, où il est désacidifié et déminéralisé au moins partiellement. A la sortie 36 de l'électrodialyseur, on achève par un électrodialyseur 37 deux compartiments, la déminéralisation du lactosérum. Pour obtenir une déminéralisation poussée, on recycle partiellement ce lactosérum en boucle sur l'électrodialyseur 37 par une dérivation 36a sur laquelle on introduit à faible dose, une base B dont l'expérience a montré qu'en augmentant les charges électriques du liquide traité, elle augmentait notablement l'efficacité de l'électrodialyseur et donc la déminéralisation du produit 38 qui est issu de ce traitement.

Sur cette figure, on a représenté une autre voie possible d'exploitation du lactosérum (en trait interrompu). Cette voie 39 est une dérivation de la voie décrite ci-avant, après le traitement thermique 33, qui conduit à une unité d'ultrafiltration 40 permettant de séparer les protéines sériques 41 du lactosérum. Le perméat lactosé 42 subit quant à lui le même traitement que celui décrit pour le lactosérum, pour être ensuite circulé sur une résine échangeuse d'anions 43 où les anions restants sont retenus ainsi que la riboflavine. Le liquide est ainsi décoloré et peut-être cristallisé en 44 et ainsi transformé en lactose de qualité pharmaceutique dès la première cristallisation.

On notera enfin sur cette figure une dérivation 45 qui permet de détourner une première fraction de lactosérum acide pour la conduire dans le réservoir 5 afin de constituer (éventuellement) l'apport 46 d'agent acide servant à la régulation du pH du lait au sortir de l'électrodialyseur 1, trois compartiments, et ce afin de combattre ne serait-ce que l'élévation naturelle de ce pH dû à la transformation de la caséine labile, notamment s'il est avantageux de procéder à un stockage à l'entrée du premier séparateur, et de garder cette caséine dans cet état instable propice à sa séparation aisée par centrifugation.

Cette dérivation 45 permet également de soutirer une seconde fraction de lactosérum acide pour l'utiliser comme agent acide introduit en 15 dans le clarificateur 14.

Il a été ci-dessus décrit l'application de l'invention à la séparation de la caséine et du lactosérum à partir du lait écréme.

L'invention trouve d'autres applications notamment en ce qui concerne d'autres liquides organiques ou biologiques. L'une d'elles réside dans la séparation sélective de telle ou telle protéine du sang. On sait en effet que chaque protéine possède un point de rupture isoélectrique qui lui est propre et auquel correspond donc un pH de valeur bien définie.

Avec le procédé selon l'invention, on procède à l'acidification du sang jusqu'à obtenir une valeur du pH voisine ou égale à celle correspondant au point isoélectrique de la protéine ou du groupe de protéines à isoler de manière à le placer dans un état labile de sorte qu'une séparation par centrifugation soit possible dans des conditions économiques satisfaisantes. Il n'est pas nécessaire d'éviter ici le point isoélectrique, car les protéines sont beaucoup plus petites que celles du lait et n'engendrent pas de risques de colmatage.

Il en est de même pour d'autres liquides tels que les ovoproduits ou les protéines végétales.

## Revendications

1. Procédé de traitement du lait écrémé comportant une étape initiale de séparation du phosphocaséinate de calcium (caséine) et du lactosérum caractérisé en ce que cette étape initiale comprend une acidification du lait (2) dans un électrodialyseur (1) trois Compartiments jusqu'à atteindre un pH voisin du point isoélectrique mais supérieur à ce dernier et une séparation (4) au moins partielle de la caséine et du lactosérum par centrifugation du lait acide à ce pH acide issu de l'électrodialyseur (1).

2. Procédé selon la revendication 1 caractérisé en ce que le composant caséine issu de cette première séparation (4) est dilué et maintenu à pH voisin de 5 avant une seconde séparation (8) par centrifugation.

3. Procédé selon la revendication 2 caractérisé en ce que l'on procède entre la première (4) et la seconde (8) séparation à une régulation du pH à la valeur voisine de 5 par dissolution de gaz carbonique (11) dans le composant.

4. Procédé selon l'une quelconque des revendications précédentes caractérisé en ce que l'on soumet le composant lactosérum à une nouvelle séparation (14) en l'acidifiant par adjonction d'une source (15) de protons jusqu'au point isoélectrique de la caséine.

5. Procédé selon la revendication 4 caractérisé en ce que l'on recycle (16) la caséine résiduelle extraite du lactosérum en tête de l'un (4) ou l'autre (8) des séparateurs centrifuges.

6. Procédé selon l'une quelconque des revendications précédentes caractérisé en ce que la caséine est transformée en caséinates au travers d'un électrodialyseur anionique trois compartiments (27), après avoir été additionnée (28) de sels de potassium, sodium, calcium.

7. Procédé selon l'une quelconque des revendications précédentes, caractérisé en ce que le lactosérum est décationisé et acidifié par passage sur une résine cationique (32) d'acide fort et conduit à l'électrodialyseur (1) trois compartiments en tant que milieu acide.

8. Procédé selon la revendication 7 caractérisé en ce qu'à la sortie de l'électrodialyseur trois compartiments (1), le lactosérum est circulé sur un électrodialyseur deux compartiments (37) avec une boucle de recyclage (36a) partiel additionné d'une base (B).

9. Procédé selon l'une des revendications 1 à 5 caractérisé en ce qu'il comporte une étape d'acidification du lactosérum sur une résine cationique (32) d'acide fort dont la sortie (39) est dirigée vers une unité d'ultrafiltration (40) pour isoler les protéines sériques, le perméat lactosé étant ensuite déminéralisé et désacidifié comme le lactosérum selon les revendications 7 et 8.

10. Procédé selon la revendication 9 caractérisé en ce que le perméat lactosé déminéralisé est conduit sur une résine échangeuse d'anions (42) pour extraction de la riboflorine qu'il contient.

11. Procédé selon l'une quelconque des revendications précédentes caractérisé en ce que le lait et ses constituants traités sont maintenus à une température comprise entre 3 et 10°C.

12. Procédé selon l'une quelconque des revendications précédentes caractérisé en ce que l'acidité du lait est inférieure ou égale à 14° Dornic.

13. Procédé pour isoler une protéine ou un groupe de protéines présents dans un liquide organique ou biologique caractérisé en ce qu'il comporte une première étape d'acidification du liquide au moyen d'un électrodialyseur à trois compartiments jusqu à un pH au voisinage de celui correspondant au point isoélectrique de la protéine ou du groupe de protéines à isoler de manière à placer cette protéine ou ce groupe de protéines dans un état labile entre solubilité et insolubilité et au moins une seconde étape de séparation, par un séparateur centrifuge, de ce composé protéique instable du reste du liquide.

## Claims

1. A method of treating skimmed milk comprising an initial step of separating calcium phosphocaseinate (casein) from whey, the method being characterized in that said initial step comprises acidifying the milk (2) in a three-compartment electrodialyzer (1) to obtain a pH close to the isoelectric point but greater than said point, followed by at least partial separation (4) of the casein from the whey by centrifuging the acid milk at said acid pH from the electrodialyzer (1).

2. A method according to claim 1, characterized in that the casein component from said first separation (4) is diluted with its pH being maintained close to 5 prior a second separation operation (8) by centrifuging, is performed.

3. A method according to claim 2, characterized in that between the first and second separation operations (4, 8), the pH is adjusted to a value close to 5 by dissolving carbon dioxide gas (11) into the said component.

4. A method according to any preceding claim, characterized in that the whey component is subjected to further separation (14) by being acidified by adding a proton source (15) until the isoelectric point of casein is reached.

5. A method according to claim 4, characterized in that the residual casein extracted from the whey is recycled (16) to the head of one or other of the centrifugal separators (4, 8).

6. A method according to any preceding claim, characterized in that the casein is transformed into caseinates by means of a three-compartment anionic electrodialyzer (27), after having had salts of potassium, sodium, or calcium, added thereto (28).

7. A method according to any preceding claim, characterized in that the whey is decationized and acidified by being passed over a strong acid cationic resin (3) and is applied as the acid medium to a three-compartment electrodialyzer (1).

8. A method according to claim 7, characterized in that the whey at the outlet from the three-compartment electrodialyzer (1) is circulated via a two-compartment electrodialyzer (37) having a partial recycling loop (36a) into which a base (B) is added.

9. A method according to any one of claims 1 to 5, characterized in that it includes a step of acidifying the whey on a strong acid cationic resin (32) whose outlet (39) is directed to an ultrafiltration unit (40) to isolate the serum proteins, with the lactose-containing permeate then being demineralized and deacidified like the whey according to claims 7 and 8.

10. A method according to claim 9, characterized in that the demineralized lactose-containing permeate is applied to an anion-exchanging resin (42) to extract the riboflavin it contains.

11. A method according to any preceding claim, characterized in that the milk and its treated component parts are maintained at a temperature lying in the range 3°C to 10°C.

12. A method according to any preceding claim, characterized in that the acidity of the milk is less than or equal to 14° on the Dornic scale.

13. A method of isolating a protein or a group of proteins present in a organic or biological liquid, the method being characterized in that it includes a first step of acidifying the liquid by means of a three-compartment electrodialyzer to a pH close to the pH which corresponds to the isoelectric point of the protein or group of proteins to be isolated, thereby placing said protein or group of proteins in a labile state between solubility and insolubility, and at least one second step of separating said unstable protein compound from the remainder of the liquid by means of a centrifugal separator.

## Patentansprüche

1. Verfahren zur Behandlung von Magermilch, umfassend eine initiale Stufe der Separation des Calciumphosphocaseinats (Casein) und des Lactoserums, dadurch gekennzeichnet, daß diese initiale Stufe eine Säuerung der Milch (2) in einem Dreikammer-Elektrodialysator (1) bis zum Erreichen eines in der Nähe des isoelektrischen Punktes, jedoch über letzterem liegenden pH-Wertes und eine zumindest teilweise Separation (4) des Caseins und des Lactoserums durch Zentrifugieren der dem Elektrodialysator (1) entstammenden Sauermilch mit diesem saueren pH-Wert umfaßt.

2. Verfahren nach Anspruch 1, dadurch gekennzeichnet, daß der dieser ersten Separation (4) entstammende Caseinbestandteil verdünnt wird und vor einer durch Zentrifugieren erfolgenden zweiten Separation (8) auf einem pH-Wert in der Nähe von 5 gehalten wird.

3. Verfahren nach Anspruch 2, dadurch gekennzeichnet, daß zwischen der ersten (4) und der zweiten Separation (8) eine Einstellung des pH auf einen Wert in der Nähe von 5 durch Auflösen von Kohlensäure (11) in dem Bestandteil vorgenommen wird.

4. Verfahren nach einem der vorhergehenden Ansprüche, dadurch gekennzeichnet, daß der Lactoserumbestandteil einer erneuten Separation (14) unterzogen wird, indem er durch Hinzufügen einer Protonenquelle (15) bis zum isoelekrischen Punkt des Gaseins gesäuert wird.

5. Verfahren nach Anspruch 4, dadurch gekennzeichnet, daß das extrahierte Restcasein des Lactoserums zur Oberseite des einen (4) oder des anderen (8) der Zentrifugalabscheider zurückgeleitet wird.

6. Verfahren nach einem der vorhergehenden Ansprüche, dadurch gekennzeichnet, daß das Gasein, nachdem ihm Kalium-, Natrium- und Kalziumsalze hinzugefügt wurden, beim Durchqueren eines anionischen Dreikammer-Elektrodialysators (27) in Gaseinat umgewandelt wird.

7. Verfahren nach einem der vorhergehenden Ansprüche, dadurch gekennzeichnet, daß das Lactoserum, indem es über ein kationenaktives Harz (32) einer starken Säure geleitet wird, von Kationen befreit und gesäuert und als saueres Milieu in den Dreikammer-Elektrodialysator (1) geleitet wird.

8. Verfahren nach Anspruch 7, dadurch gekennzeichnet, daß das Lactoserum am Ausgang des Dreikammer-Elektrodialysators (1) in einem Zweikammer-Elektrodialysator (37) zirkuliert wird, der einen Kreislauf (36a) für eine partielle Rückführung umfaßt, dem eine Base (B) hinzugefügt wird.

9. Verfahren nach einem der Ansprüche 1 bis 5, gekennzeichnet durch einen Schritt der Säuerung des Lactoserums über einem kationenaktiven Harz (32) einer starken Säure, dessen Produkt (39) zu einer Ultrafiltrationseinheit (40) geleitet wird, um die Serumproteine zu isolieren, wobei das milchige Permeat anschließend als das Lactoserum gemäß den Ansprüchen 7 und 8 entmineralisiert und entsäuert wird.

10. Verfahren nach Anspruch 9, dadurch gekennzeichnet, daß das entmineralisierte milchige Permeat zur Extraktion des Riboflavins, das es enthält, über ein Ionenaustauscherharz (42) geleitet wird.

11. Verfahren nach einem der vorhergehenden Ansprüche, dadurch gekennzeichnet, daß die Milch und ihre behandelten Bestandteile auf einer Temperatur zwischen 3 und 10°C gehalten werden.

12. Verfahren nach einem der vorhergehenden Ansprüche, dadurch gekennzeichnet, daß der Säuregrad der Milch kleiner oder gleich 14° Dornic ist.

13. Verfahren zum Isolieren eines in einer organischen oder biologischen Flüssigkeit enthaltenen Proteins oder einer Proteingruppe, gekennzeichnet durch eine erste Stufe der Säuerung der Flüssigkeit mittels eines Dreikammer-Elektrodialysators bis zu einem pH-Wert in der Nähe des Wertes, der dem isoelektrischen Punkt des zu isolierenden Proteins oder der zu isolierenden Proteingruppe entspricht, derart, daß dieses Protein oder die Proteingruppe in einen labilen Zustand zwischen Löslichkeit und Unlöslichkeit versetzt wird, und durch wenigstens eine zweite Stufe der Separation dieser Proteinverbindung der Restflüssigkeit durch einen Zentrifugalabscheider.
